# EUROPEAN PATENT APPLICATION

(11) **EP 3 537 550 A1**
(43) Date of publication of application: **11.09.2019**
(21) Application number: 18761451.6
(22) Date of filing: 27.02.2018
(51) Int. Cl.: H01S 3/098, H01S 1/02

(54) **OPTICAL PULSE SIGNAL GENERATION METHOD AND APPARATUS, AND A COMPUTER STORAGE MEDIUM**

(30) Priority: 01.03.2017 CN 201710117695
(71) Applicant: ZTE Corporation, Shenzhen, Guangdong 518057 (CN)
(72) Inventor: ZONG, Baiqing, Shenzhen Guangdong 518057 (CN)
(74) Representative: Brevalex
(86) International application number: PCT/CN2018/077449
(87) International publication number: WO 2018/157799

(57) **Abstract**

An optical pulse signal generation method comprises: generating high-frequency microwave signals by means of a passive mode-locked laser, and extracting a high-frequency harmonics signal from the high-frequency microwave signals; inputting the high-frequency harmonics signal into an electro-optic modulator (EOM) to adjust an active mode-locked laser; and generating a high-speed optical pulse signal by means of the active mode-locked laser. Also disclosed are an optical pulse signal generation apparatus and a computer storage medium.

## Description

### CROSS-REFERENCE TO RELATED APPLICATION

The present application is filed based upon and claims benefit of Chinese Patent Application No. 201710117695.5, filed on March 01, 2017, the contents of which are hereby incorporated by reference in its entirety.

### TECHNICAL FIELD

The invention relates to optical comb technology, and particularly to a high-frequency ultralow-noise high-speed optical pulse signal generation method and apparatus and a computer storage medium.

### BACKGROUND

In recent years, generation of a high-repetition-frequency ultralow-noise optical comb pulse has attracted much attention. An optical comb is a light source which has a discrete spectrum and of which different components are equally spaced. The optical comb can generate a femtosecond pulse sequence with little timing jitter. The optical comb is a useful tool, and it may associate a reference radio frequency (RF) signal with an optical frequency. Therefore, the optical comb is being extensively applied to various fields, for example, high-speed and high-resolution optical analog-to-digital conversion, photoelectric neural calculation, frequency measurement, timing distribution, high-speed optical communication and optical clocks.

Timing jitter of an optical comb generated by using a mode-locked laser can be controlled to a subfemtosecond order and even an attosecond order, and the timing jitter is at least three orders of magnitude less than a timing jitter of an electronic pulse. A microwave source generated by the optical comb is detected by a photoelectric detector (PD), and a jitter thereof is a few orders of magnitude less than that of a microwave source generated by an electrical method. Moreover, a pulse width of a mode-locked optical comb is also small to reach the orders of subpicosecond and dozens of femtoseconds. Research based on an optical frequency comb has attracted attentions of many scientific research groups throughout the world, the research and technological improvements are also extensively made, and it is a prospective direction for high-speed signal analog-to-digital conversion.

The mode-locked laser for generating the optical comb mainly includes an active mode-locked laser and passive mode-locked laser. In active mode locking, mode locking is implemented by use of amplitude modulation or phase modulation generated by a modulator. In passive mode locking, intracavity loss is modulated by use of a change relationship between a light intensity and a nonlinear effect in an optical fiber to achieve a mode locking. The active mode-locked laser can achieve a high repetition frequency capable of reaching more than 10 GHz. An optical pulse of the passive mode-locked laser has the advantage of high stability, and a timing jitter may be at a subfemtosecond order and even below. The passive mode-locked laser can generate an ultralow-noise pulse signal, but a repetition frequency is limited by a cavity length. A phase noise of the active mode-locked laser is likely to be limited by an RF source.

### SUMMARY

For solving the foregoing technical problem, embodiments of the invention provide a method and a device for generating an optical pulse signal and a computer storage medium.

The embodiments of the invention provide a method for generating an optical pulse signal, which includes the following operations.

A high-frequency microwave signal is generated through a passive mode-locked laser, and a high-order harmonic-frequency signal is extracted from the high-frequency microwave signal;
the high-order harmonic-frequency signal is inputted into an electro-optical modulator (EOM) to adjust an active mode-locked laser; and
a high-speed optical pulse signal is generated through the active mode-locked laser.

In the embodiments of the invention, the method may further include the following operation.

The high-speed optical pulse signal is divided into a first signal and a second signal according to a preset proportion. A power of the first signal is higher than a power of the second signal. The first signal is used to form intracavity oscillation and the second signal is used for signal detection and phase noise.

In the embodiments of the invention, the method may further include the following operation.

The passive mode-locked laser is constructed, where a repetition frequency of the passive mode-locked laser is a and a cavity length is Li=c/2a, where a>0 and c indicates a light speed.

In the embodiments of the invention, the method may further include the following operation.

The active mode-locked laser is constructed, where a fundamental mode of the active mode-locked laser is b and a cavity length is L₂=c/2b, where b>0 and c indicates a light speed.

In the embodiments of the invention, the operation that the high-order harmonic-frequency signal is extracted from the high-frequency microwave signal may include the following operations.

The high-order harmonic-frequency signal is extracted from the high-frequency microwave signal, and the high-order harmonic-frequency signal is filtered and amplified.

The embodiments of the invention provide a device for generating an optical pulse signal, which includes a first generation unit, a transmission unit and a second generation unit.

The first generation unit is configured to generate a high-frequency microwave signal through a passive mode-locked laser and extract a high-order harmonic-frequency signal from the high-frequency microwave signal.

The transmission unit is configured to input the high-order harmonic-frequency signal into an EOM to adjust an active mode-locked laser.

The second generation unit is configured to generate a high-speed optical pulse signal through the active mode-locked laser.

In the embodiments of the invention, the device may further include a division unit.

The division unit may be configured to divide the high-speed optical pulse signal into a first signal and a second signal according to a preset proportion. A power of the first signal is higher than a power of the second signal. The first signal is used to form intracavity oscillation and the second signal is used for signal detection and phase noise.

In the embodiments of the invention, the device may further include a construction unit.

The construction unit may be configured to construct the passive mode-locked laser, where a repetition frequency of the passive mode-locked laser is a and a cavity length is L₁=c/2a, where a>0 and c indicates a light speed.

In the embodiments of the invention, the device may further include the construction unit.

The construction unit may be configured to construct the active mode-locked laser, where a fundamental mode of the active mode-locked laser is b and a cavity length is L₂=c/2b, where b>0 and c indicates the light speed.

In the embodiments of the invention, the first generation unit may further be configured to extract the high-order harmonic-frequency signal from the high-frequency microwave signal and filter and amplify the high-order harmonic-frequency signal.

The embodiments of the invention provide a computer storage medium, which may store a computer program, the computer program being configured to execute the above method for generating an optical pulse signal.

In the technical solutions of the embodiments of the invention, the high-frequency microwave signal is generated through the passive mode-locked laser, and the high-order harmonic-frequency signal is extracted from the high-frequency microwave signal. The high-order harmonic-frequency signal is inputted into the EOM to adjust the active mode-locked laser. The high-speed optical pulse signal is generated through the active mode-locked laser. The technical solutions of the embodiments of the invention have two advantages of high repetition frequency and low noise, a frequency thereof can reach 10 GHz, and a phase noise under 1 MHz may reach -158 dBc/Hz.

### BRIEF DESCRIPTION OF DRAWINGS

The drawings generally illustrate the various embodiments discussed herein by way of example and not limitation.
FIG. 1 is a first flowchart of a method for generating an optical pulse signal according to an embodiment of the invention.
FIG. 2 is a second flowchart of a method for generating an optical pulse signal according to an embodiment of the invention.
FIG. 3 is a hardware entity diagram of a device for generating an optical pulse signal according to an embodiment of the invention.
FIG. 4 is a structure diagram of a device for generating an optical pulse signal according to an embodiment of the invention.

### DETAILED DESCRIPTION

In order to understand the characteristics and technical contents of the embodiments of the invention in more detail, implementation of the embodiments of the invention will be described below in combination with the drawings in detail. The appended drawings are only for reference and description and not intended to limit the embodiments of the invention.

The embodiments of the invention provide a method and a device for generating a high-frequency ultralow-noise high-speed optical pulse signal. Mode locking of a passive laser is implemented in a nonlinear polarization rotation (NPR) mode locking, and a high-frequency microwave signal is generated by the passive laser. Then a high-order harmonic is extracted from the high-frequency microwave signal and injected into an EOM to adjust an active mode-locked laser, thereby generating a high-speed optical comb sequence (i.e., a high-speed optical pulse signal). According to the solution, the characteristic of ultralow noise of the passive mode-locked laser and the characteristic of high repetition frequency of the active mode-locked laser are combined, and a low-cost, ultralow-noise and high-frequency optical pulse sequence can be obtained without an external RF source.

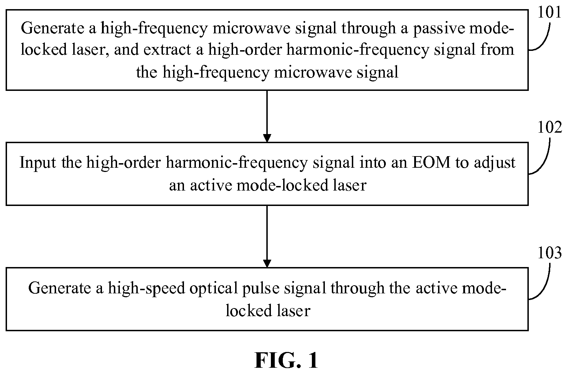

FIG. 1 is a first flowchart of a method for generating an optical pulse signal according to an embodiment of the invention. As illustrated in FIG. 1, the method for generating an optical pulse signal includes the following operations.

At block 101, a high-frequency microwave signal is generated through a passive mode-locked laser, and a high-order harmonic-frequency signal is extracted from the high-frequency microwave signal.

In the embodiment of the invention, the method further includes the following operations. The passive mode-locked laser is constructed, where a repetition frequency of the passive mode-locked laser is a and a cavity length is L₁=c/2a, where a>0 and c indicates a light speed.

In a specific embodiment, the repetition frequency of the passive mode-locked laser is 74.5 MHz, and the cavity length is 2.68 m.

In the embodiment of the invention, the method further includes the following operation. An active mode-locked laser is constructed, where a fundamental mode of the active mode-locked laser is b and a cavity length is L₂=c/2b, where b>0 and c indicates the light speed.

In a specific embodiment, the fundamental mode of the active mode-locked laser is 4.0 MHz, and the cavity length is 49.8 m.

In the embodiment of the invention, the operation that the high-order harmonic-frequency signal is extracted from the high-frequency microwave signal includes the following operations.

The high-order harmonic-frequency signal is extracted from the high-frequency microwave signal, and the high-order harmonic-frequency signal is filtered and amplified to obtain a high-order harmonic-frequency signal with a signal to noise ratio of 5 dB.

At block 102, the high-order harmonic-frequency signal is inputted into an EOM to adjust the active mode-locked laser.

At block 103, a high-speed optical pulse signal is generated through the active mode-locked laser.

In the embodiment of the invention, the high-speed optical pulse signal is divided into a first signal and a second signal according to a preset proportion. A power of the first signal is higher than a power of the second signal, the first signal is used to form intracavity oscillation and the second signal is used for signal detection and phase noise.

For example, the preset proportion is 9:1. The first signal accounts for 90% of the whole high-speed optical pulse signal, and the second signal accounts for 10% of the whole high-speed optical pulse signal.

The technical solution of the embodiment of the invention has two advantages of high repetition rate and low noise, a frequency can reach 10GHz, a phase noise is very low, and the phase noise under 1 MHz can be lower than -158 dBc/Hz.

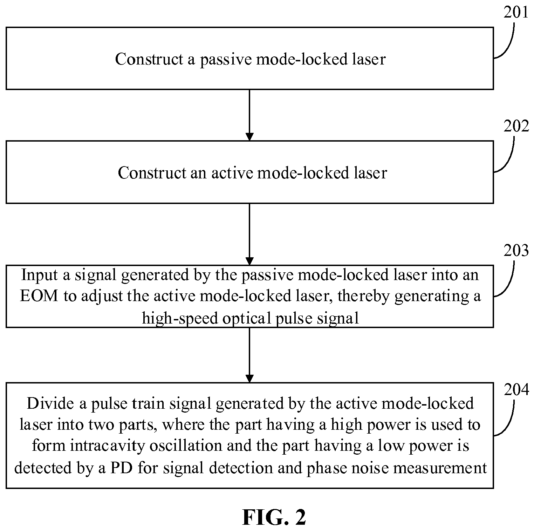

FIG. 2 is a second flowchart of a method for generating an optical pulse signal according to an embodiment of the invention. As illustrated in FIG. 2, the method for generating an optical pulse signal generation includes the following operations.

At block 201, a passive mode-locked laser is constructed.

Herein, the passive mode-locked laser is PMLL. A repetition frequency of the passive mode-locked laser is a and a cavity length is L₁=c/2a, where a>0 and c indicates a light speed. In an embodiment of the invention, the repetition frequency of the passive mode-locked laser is 74.5 MHz, and the cavity length is 2.68 m.

At block 202, an active mode-locked laser is constructed.

Herein, the active mode-locked laser is AMLL. A fundamental mode of the active mode-locked laser is b and a cavity length is L₂=c/2b, where b>0 and c indicates the light speed. In an embodiment of the invention, the fundamental mode of the passive mode-locked laser is 4.0 MHz, and the cavity length is 49.8 m.

At block 203, a signal generated by the passive mode-locked laser is inputted into an EOM to adjust the active mode-locked laser, thereby generating a high-speed optical pulse signal.

In an embodiment of the invention, a high-order harmonic of the passive mode-locked laser is selected, and a signal injected into the active mode-locked laser is about 5 dB.

Herein, the high-speed optical pulse signal has the characteristics of high repetition frequency and ultralow noise.

According to the embodiment of the invention, the active mode-locked laser is adjusted through the passive mode-locked laser.

At block 204, a pulse train signal generated by the active mode-locked laser is divided into two parts. The part having a high power is used to form intracavity oscillation and the part having a low power is detected by a PD for signal detection and phase noise measurement.

In an embodiment of the invention, the pulse train signal generated by the active mode-locked laser is divided into two parts according to a proportion of 9:1. 90% part having a high power is used to form intracavity oscillation and 10% part having a power of about 2.15 dBm is detected by the PD for signal detection and phase noise measurement.

The method for acquiring an optical pulse signal according to the invention has two advantages of high repetition frequency and low noise, a frequency thereof can reach 10 GHz, and a phase noise under 1 MHz can reach -158 dBc/Hz.

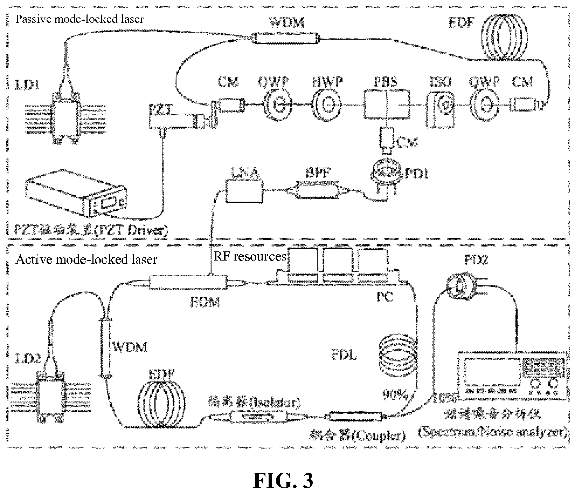

FIG. 3 is a hardware entity diagram of a device for generating an optical pulse signal according to an embodiment of the invention. As illustrated in FIG. 3, the device includes a laser pumping source (a parameter is optionally 980 nm), a pump laser coupler (WDM) (a parameter is optionally 980 nm/1550 nm), a piezoelectric ceramic device (PZT), a doped fiber for amplification, an optical fiber collimator, a 1/4 zeroth-order wave plate (a parameter is optionally 1550 nm), a 1/2 zeroth-order wave plate (a parameter is optionally 1550 nm), a polarization beam splitter (PBS), an optical fiber isolator, a PD, a filter, an electric amplifier, an EOM and an optical fiber coupler.
1) A passive mode-locked laser implements mode locking in an NPR manner. A frequency of an optical comb can be stabilize on a frequency standard by controlling a pump current of the mode-locked laser, adjusting the PZT of the laser to change a cavity length, adopting a proportion integration differentiation (PID) adaptive phase-locked loop and the like to obtain an optical comb with high frequency accuracy. Although the optical comb generated by the passive mode-locked laser is more stable than that generated by an active mode-locked laser, the optical comb may still have a phase noise mainly because of influences of an intracavity problem and an external environment. For further reducing the phase noise of the passive mode-locked laser, intracavity chromatic dispersion should be reduced. A repetition frequency of the passive mode-locked laser adopted in the embodiment of the invention is a, and a corresponding cavity length is about L₁=c/2a. The PBS splits light into two parts. One part is taken as output and the other part returns into a cavity to form stable oscillation. In a specific embodiment, a=74.5 MHz, L₁=2.68 m, and the light entering the PBS is about 3 dBm.
2) By observing a signal spectrum of the PMLL, it can be seen that a power of a high-order harmonic signal is high and stable, therefore a high-order harmonic of the PMLL is selected. The high-order harmonic signal, after being filtered and amplified, is injected into the active mode-locked laser. In a specific implementation, an optical power of the high-order harmonic signal is about -12 dBm, and the signal, after being filtered and amplified to 5 dBm, is injected into the active mode-locked laser.
3) A fundamental mode of the active mode-locked laser is b, a corresponding cavity length is about L₂=c/2b, and a maximum optical power of a pump laser reaches hundreds of milliwatts. In a specific implementation, b=4.0 MHz, L₂=49.8 m, the maximum optical power of the laser is 600 mW, and laser enters the EOM through a 980 nm/1550 nm pump coupler module. The EOM adopted in the embodiment of the invention has a 10 G bandwidth. In addition, the isolator in a system is adopted to ensure unidirectional transmission of light, and three personal computers (PCs) may be configured to control a polarization state of the laser entering the cavity.
4) A pulse train signal generated by the AMLL is divided into two parts according to a certain proportion. The part having a high power is used to form intracavity oscillation, and the other part having a low power may be detected by the PD2 for signal detection and phase noise measurement. In a specific implementation, the pulse train signal generated by the AMLL is divided into two parts according to a proportion of 9:1, the 90% part having the high power is configured to form intracavity oscillation, and the 10% part having a low power of about 2.15 dBm may be detected by the PD2 for signal detection and phase noise measurement.

According to the embodiment of the invention, the system combining the passive mode-locked laser and the active mode-locked laser is designed, so that a pulse signal having a high stability and a high repetition frequency can be generated, and the signal has a low phase noise.

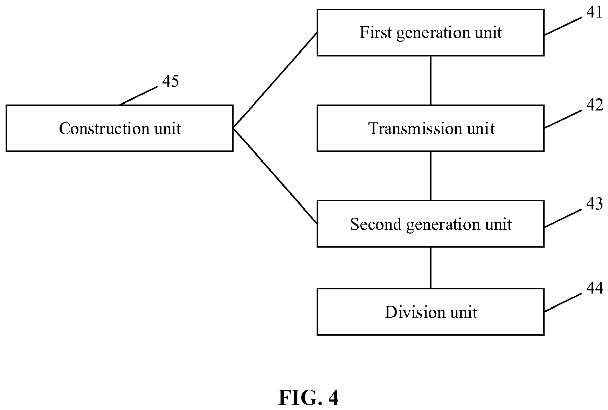

FIG. 4 is a structure diagram of a device for generating an optical pulse signal according to an embodiment of the invention. As illustrated in FIG. 4, the device includes a first generation unit 41, a transmission unit 42 and a second generation unit 43.

The first generation unit 41 is configured to generate a high-frequency microwave signal through a passive mode-locked laser and extract a high-order harmonic-frequency signal from the high-frequency microwave signal.

Specifically, referring to FIG. 3, devices in the dashed box of the upper part in FIG. 3 are integrated into the first generation unit 41.

The transmission unit 42 is configured to input the high-order harmonic-frequency signal into an EOM to adjust an active mode-locked laser.

Specifically, referring to FIG. 3, the high-order harmonic-frequency signal is inputted into the EOM through a low noise amplifier (LNA). Herein, the LNA is an electric amplifier.

The second generation unit 43 is configured to generate a high-speed optical pulse signal through the active mode-locked laser.

Specifically, referring to FIG. 3, devices in the dashed box of the lower part in FIG. 3 are integrated into the second generation unit 43.

In the embodiment of the invention, the device further includes a division unit 44.

The division unit 44 is configured to divide the high-speed optical pulse signal into a first signal and a second signal according to a preset proportion. A power of the first signal is higher than a power of the second signal, the first signal is used to form intracavity oscillation and the second signal is used for signal detection and phase noise measurement.

Specifically, referring to FIG. 3, the division unit 44 is implemented through a coupler.

In the embodiment of the invention, the device further includes a construction unit 45.

The construction unit 45 is configured to construct the passive mode-locked laser, where a repetition frequency of the passive mode-locked laser is a and a cavity length is L₁=c/2a, where a>0 and c indicates a light speed.

In the embodiment of the invention, the device further includes the construction unit 45.

The construction unit 45 is configured to construct the active mode-locked laser, where a fundamental mode of the active mode-locked laser is b and a cavity length is L₂=c/2b, where b>0 and c indicates the light speed.

In the embodiment of the invention, the first generation unit 41 is further configured to extract the high-order harmonic-frequency signal from the high-frequency microwave signal, and filter and amplify the high-order harmonic-frequency signal.

Specifically, referring to FIG. 3, filtering is implemented through a filter (Berkeley packet filter (BPF)), and amplification is implemented through the LNA.

Those skilled in the art should understand that, functions realized by various units in the device for generating the optical pulse signal illustrated in FIG. 4 may be understood with reference to the related description in the abovementioned method for generating the optical pulse signal.

In a practical application, all of functions realized by each unit in the optical pulse signal generation device may be realized by a central processing unit (CPU), or a micro processor unit (MPU), or a digital signal processor (DSP), or a field programmable gate array (FPGA) and the like in the device for generating the optical pulse signal.

It should be understood by those skilled in the art that, the embodiments of the invention may be provided as a method, a system or a computer program product. Therefore, the invention may take a form of a hardware embodiment, a software embodiment, or a combined of software and hardware aspects. Moreover, the invention may take the form of a computer program product embodied on one or more computer usable storage media (including but not limited to a disk storage and optical memory and the like) in which computer usable program code is embodied.

The invention is described with reference to flowcharts and/or block diagrams of methods, devices (systems) and computer program products according to the embodiments of the invention. It is to be understood that each flow and/or block of the flowchart and/or the block diagram, and a combination of a flow and/or a block in a flowchart and/or block diagram may be implemented by computer program instructions. These computer program instructions may be provided to a processor of a general purpose computer, a special purpose computer, an embedded processor, or other programmable data processing device to produce a machine for the execution of instructions, so as to produce an apparatus for implementing the functions specified in one or more flows of the flowchart or in one or more blocks of the flowchart by the instructions executed by a processor of a computer or other programmable data processing device..

The computer program instructions may also be stored in a computer readable memory that can direct a computer or other programmable data processing device to operate in a specific manner, such that the instructions stored in the computer readable memory produce an article of manufacture including the instruction device. The instruction apparatus implements the functions specified in one or more flows of the flowchart and/or one or more blocks of a block diagram.

These computer program instructions may also be loaded onto a computer or other programmable data processing device such that a series of operational steps are performed on a computer or other programmable device to produce computer-implemented processing for execution on a computer or other programmable device. Accordingly, the instructions executed on a computer or other programmable device provide operations for implementing the functions specified in one or more flows of a flowchart and/or one or more blocks of a block diagram.

Correspondingly, the embodiments of the disclosure also provide a computer storage medium, in which a computer program is stored, the computer program being configured to execute the method for generating the optical pulse signal in the embodiments of the disclosure.

The above is only the preferred embodiment of the invention and not intended to limit the scope of protection of the invention.

### INDUSTRIAL APPLICABILITY

According to the technical solutions of the embodiments of the invention, the high-frequency microwave signal is generated through the passive mode-locked laser, and the high-order harmonic-frequency signal is extracted from the high-frequency microwave signal. The high-order harmonic-frequency signal is inputted into the EOM to adjust the active mode-locked laser, and the high-speed optical pulse signal is generated through the active mode-locked laser. Therefore, two advantages of high repetition frequency and low noise are achieved, the frequency can reach 10 GHz, and the phase noise under 1MHz can reach -158 dBc/Hz.

## Claims

1. A method for generating an optical pulse signal, **characterized in that** the method comprises:
generating a high-frequency microwave signal through a passive mode-locked laser, and extracting a high-order harmonic-frequency signal from the high-frequency microwave signal;
inputting the high-order harmonic-frequency signal into an electro-optical modulator, EOM, to adjust an active mode-locked laser; and
generating a high-speed optical pulse signal through the active mode-locked laser.

2. The method of claim 1, further comprising:
dividing the high-speed optical pulse signal into a first signal and a second signal according to a preset proportion, wherein a power of the first signal is higher than a power of the second signal, the first signal is used to form intracavity oscillation and the second signal is used for signal detection and phase noise measurement.

3. The method of claim 1, further comprising:
constructing the passive mode-locked laser, wherein a repetition frequency of the passive mode-locked laser is a and a cavity length is L₁=c/2a, where a>0 and c indicates a light speed.

4. The method of claim 1, further comprising:
constructing the active mode-locked laser, wherein a fundamental mode of the active mode-locked laser is b and a cavity length is L₂=c/2b, where b>0 and c indicates a light speed.

5. The method of claim 1, wherein extracting the high-order harmonic-frequency signal from the high-frequency microwave signal comprises:
extracting the high-order harmonic-frequency signal from the high-frequency microwave signal, and filtering and amplifying the high-order harmonic-frequency signal.

6. A device for generating an optical pulse signal, **characterized in that** the device comprises:
a first generation unit, configured to generate a high-frequency microwave signal through a passive mode-locked laser, and extract a high-order harmonic-frequency signal from the high-frequency microwave signal;
a transmission unit, configured to input the high-order harmonic-frequency signal into an electro-optical modulator, EOM, to adjust an active mode-locked laser; and
a second generation unit, configured to generate a high-speed optical pulse signal through the active mode-locked laser.

7. The device of claim 6, further comprising:
a division unit, configured to divide the high-speed optical pulse signal into a first signal and a second signal according to a preset proportion, wherein a power of the first signal is higher than power of the second signal, the first signal is used to form intracavity oscillation and the second signal is configured for signal detection and phase noise measurement.

8. The device of claim 6, further comprising:
a construction unit, configured to construct the passive mode-locked laser, wherein a repetition frequency of the passive mode-locked laser is a and a cavity length is L₁=c/2a, where a>0 and c indicates a light speed.

9. The device of claim 6, further comprising:
the construction unit, configured to construct the active mode-locked laser, wherein a fundamental mode of the active mode-locked laser is b and a cavity length is L₂=c/2b, where b>0 and c indicates a light speed.

10. The device of claim 6, wherein the first generation unit is further configured to extract the high-order harmonic-frequency signal from the high-frequency microwave signal and filter and amplify the high-order harmonic-frequency signal.

11. A computer storage medium, in which a computer-executable instruction is stored, the computer-executable instruction being configured to execute the method for generating the optical pulse signal of any one of claims 1-5.
